# EUROPÄISCHE PATENTSCHRIFT

(11) **EP 2 203 667 B1**
(45) Veröffentlichungstag und Bekanntmachung des Hinweises auf die Patenterteilung: **19.10.2011**
(21) Anmeldenummer: 08843929.4
(22) Anmeldetag: 28.10.2008
(51) Int. Cl.: F16K 1/44

(54) **SITZREINIGUNGSFÄHIGES DOPPELSITZVENTIL UND VERFAHREN ZUR REINIGUNG DES SITZREINIGUNGSFÄHIGEN DOPPELSITZVENTILS**
DOUBLE-SEAT VALVE HAVING A SEAT-CLEANING FUNCTION, AND METHOD FOR CLEANING SAID DOUBLE-SEAT VALVE HAVING A SEAT-CLEANING FUNCTION
SOUPAPE A DOUBLE SIEGE AVEC POSSIBILITE DE NETTOYAGE DE SIEGE ET PROCEDE DE NETTOYAGE DE CETTE SOUPAPE

(30) Priorität: 30.10.2007 DE 102007051730
(43) Veröffentlichungstag der Anmeldung: 07.07.2010
(73) Patentinhaber: GEA Tuchenhagen GmbH, 21514 Büchen (DE)
(72) Erfinder: TOLLE, Bastian, 21514 Büchen (DE); SCHOLZ, Gundar, 21465 Reinbek (DE); BURMESTER, Jens, 23883 Grambek (DE)
(74) Vertreter: Hauck Patent- und Rechtsanwälte
(86) Internationale Anmeldenummer: PCT/EP2008/009101
(87) Internationale Veröffentlichungsnummer: WO 2009/056277

(56) Entgegenhaltungen:
- WO-A-2005/098287
- DE-A1- 4 118 874
- DE-U1-202006 004 173

## Beschreibung

### TECHNISCHES GEBIET

Die Erfindung betrifft ein sitzreinigungsfähiges Doppelsitzventil mit zwei seriell angeordneten, relativ zueinander bewegbaren Schließgliedern, die in der Schließstellung des Doppelsitzventils das Überströmen von Fluiden von einem Ventilgehäuseteil in ein anderes verhindern und die sowohl in der Schließ- als auch in der Offenstellung einen Leckagehohlraum begrenzen, der, bezogen auf eine vertikale Anordnung des Doppelsitzventils, einen nach unten aus dem zugeordneten Ventilgehäuseteil herausgeführten Leckageablauf aufweist, mit dem ersten Schließglied, das als Schieberkolben ausgebildet und unabhängig angetrieben ist und in seiner Schließstellung in einer die Ventilgehäuseteile miteinander verbindenden Verbindungsöffnung dichtend Aufnahme findet und bei seiner Öffnungsbewegung am einer zweiten Sitzfläche zugeordneten zweiten Schließglied dichtend zur Anlage kommt und dieses gleichfalls in die Offenstellung überführt, mit einer im ersten Schließglied angeordneten ersten Sitzdichtung, die radial gegenüber einer in der Verbindungsöffnung ausgebildeten zylindrischen ersten Sitzfläche abdichtet, mit den Schließgliedern, die unabhängig voneinander durch einen Teilhub jeweils spaltweit in eine Sitzreinigungsstellung zwecks Spülung ihrer Sitzflächen überführbar sind, wobei das zweite Schließglied durch einen mit der Öffnungsbewegung gleichsinnigen zweiten Teilhub und das erste Schließglied durch einen mit der Öffnungsbewegung gegensinnigen ersten Teilhub in seine jeweilige Sitzreinigungsstellung überführbar sind und mit konzentrisch ineinander angeordneten Ventilstangen für die Schließglieder, die nach oben in einen gemeinsamen Antrieb hineingeführt sind und mit einem am unten liegenden Schließglied angeordneten Rohrschaft, der radial außenseits das zugeordnete Ventilgehäuseteil nach unten abgedichtet durchdringt, der radial innenseits über eine Ablaufbohrung den Leckagehohlraum mit der Umgebung des Doppelsitzventils verbindet und der nach oben in die Ventilstange des unten liegenden Schließgliedes übergeht.

Das zweite Schließglied kann gleichfalls als Schieberkolben mit radial wirkenden Dichtungsmitteln ausgestattet sein, wobei die zugeordnete zylindrische zweite Sitzfläche in der Verbindungsöffnung ausgebildet ist. Das zweite Schließglied kann aber auch als Sitzteller ausgeführt sein, der auf einer zugeordneten ebenen oder konischen zweiten Sitzfläche axial bzw. axiavradial dichtet. Sitzreinigungsfähige Doppelsitzventile mit den einleitend angeführten Merkmalen öffnen in die volle Offenstellung entweder nach oben (Regelfall) oder nach unten. Bei nach oben öffnendem Doppelsitzventil ist das unabhängig angetriebene erste Schließglied unten liegend und bei der umgekehrten Öffnungsrichtung ist das unabhängig angetriebene erste Schließglied oben liegend angeordnet.

### STAND DER TECHNIK

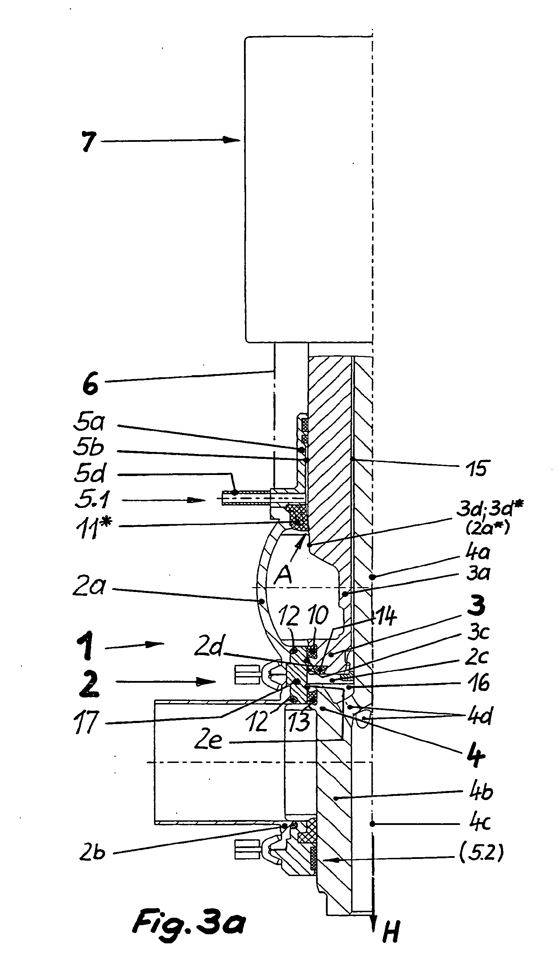

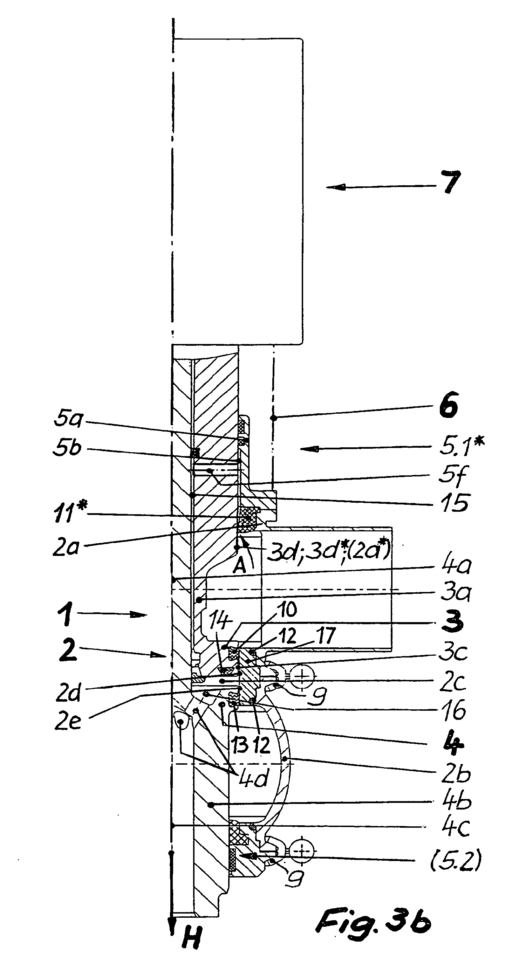

Aus der DE 38 35 944 C2 ist ein sitzreinigungsfähiges Doppelsitzventil bekannt, bei dem das unabhängig angetriebene erste Schließglied als Schieberkolben ausgebildet und bei der zugeordneten Sitzreinigung durch einen der Öffnungsbewegung entgegengerichteten ersten Teilhub in seine Sitzreinigungsstellung überführbar ist (**Figur 3**). Das abhängig angetriebene zweite Schließglied ist als Sitzteller ausgeführt, der auf einer zugeordneten konischen Sitzfläche dichtet, und es wird durch einen der Öffnungsbewegung gleichgerichteten zweiten Teilhub in seine Sitzreinigungsstellung überführt, in der, bezogen auf eine vertikale Anordnungslage, ein von unten nach oben freier Ringspalt zwischen Schließglied und zugeordneter Sitzfläche gebildet ist.

Ein das untere Ventilgehäuseteil nach unten abgedichtet durchsetzender Rohrschaft des unten liegenden, ersten Schließgliedes ist im bewegten Durchdringungsbereich derart zu einem Zylinder, einem sog. Druckausgleichkolben, vergrößert, dass sich an der Oberseite des Druckausgleichkolbens eine Ringfläche ergibt, die etwa gleich der benachbarten Ringfläche an der Unterseite des ersten Schließgliedes ist. Zwischen der Außenfläche des Druckausgleichkolbens und einem unteren Ringansatz des unteren Ventilgehäuseteils wird bei nach unten in Sitzreinigungsstellung bewegtem ersten Schließglied ein von oben nach unten freier kreisförmiger Spalt ausgebildet, über den die Außenfläche gleichzeitig mit dem ersten Schließglied spülbar ist. In Verbindung mit einem sich an den Ringansatz anschließenden Topf wird weiterhin eine Spüleinrichtung gebildet, mit der der Druckausgleichkolben am unteren, ersten Schließglied in Gänze reinigbar ist, so dass beim vollen Öffnungs- und Schließhub in den Durchführungsbereich verschlepptes Produkt sicher abzureinigen ist. Eine Reinigung der Ventilstange des oberen, zweiten Schließgliedes im Bereich ihrer Durchführung durch das zugeordnete Ventilgehäuseteil ist nicht vorgesehen.

In der EP 0 587 690 B1 ist ein Doppelsitzventil beschrieben, das zwei, jeweils als Schieberkolben ausgebildete Schließglieder aufweist. Das Doppelsitzventil öffnet, bezogen auf eine vertikale Anordnungslage, von oben nach unten. Die zur Betätigung der beiden Schließglieder vorgesehenen Ventilstangen sind beide nach oben aus dem zugeordneten Ventilgehäuseteil heraus- und in einen gemeinsamen Antrieb hineingeführt. Die Hohlstange des oberen, ersten Schließgliedes ist in ihrem Durchdringungsbereich mit dem Ventilgehäuse zu einem Druckausgleichkolben erweitert, und dieser Durchdringungsbereich ist mit einer Spüleinrichtung versehen, so dass ein hinreichend großer axialer Erstreckungsbereich des Druckausgleichkolbens im Bedarfsfall einer Reinigung unterzogen werden kann. Das untere, zweite Schließglied verlängert sich in einen, gleichfalls als Druckausgleichkolben ausgebildeten rohrförmigen Schaft, der nach unten aus dem zugeordneten Ventilgehäuseteil abgedichtet herausgeführt ist. Auch dieser Durchdringungsstelle ist in einer bevorzugten Ausführungsform eine Spüleinrichtung zugeordnet, so dass ein hinreichend großer axialer Erstreckungsbereich auch dieses Druckausgleichkolbens einer Reinigung unterzogen werden kann.

Das vorstehende Doppelsitzventil ist nur bedingt sitzreinigungsfähig, d.h. seine Sitzflächen sind nicht spaltweit durch einen jeweiligen Teilhub zu öffnen. Vielmehr werden zur Reinigung der Sitzflächen die zugeordneten Schließglieder nur so weit gleich- oder gegensinnig zueinander verschoben, dass die jeweils teilweise freigelegte Sitzflächen mit Reinigungsflüssigkeit beaufschlagt werden kann (sog. Wischreinigung). Die Bereitstellung der Reinigungsflüssigkeit erfolgt dadurch, dass durch einen dem vollen Öffnungshub des Doppelsitzventils entgegengerichteten Teilhub auch die Durchführung des dem jeweiligen Schließglied zugeordneten Druckausgleichkolbens derart freigegeben wird, dass der Reinigungsmittelstrom über die freigegebene Durchführung hindurch aus dem Ventilgehäuseteil abgezweigt wird und dabei diese Durchführung und mindestens einen der folgenden Bereiche, nämlich die andere Durchführung, den Leckagehohlraum und die zugänglich gemachte Sitzfläche, reinigt.

Der Begriff Stangendurchführung soll nachfolgend neben der Durchführung der Ventilstange durch das zugeordnete Ventilgehäuseteil auch die Durchführung des am unten liegenden Schließglied angeordneten, das zugeordnete Ventilgehäuseteil nach unten durchdringen Rohrschaftes subsumieren. Grundsätzlich lässt sich feststellen, dass die Stangendurchführung oder die Durchführung des in diesem Bereich vorgesehenen Druckausgleichkolbens, auf den die Ventilstange bzw. der Rohrschaft ggf. jeweils erweitert sein kann, des unabhängig angetriebenen Schließgliedes kritischer ist als die entsprechende Durchführung beim abhängig angetriebenen Schließglied. Dies resultiert aus der Tatsache, dass das unabhängig angetriebene Schließglied beim Öffnungshub stets in Richtung des abhängig angetriebenen Schließgliedes bewegt und demzufolge die zugeordnete Ventilstange oder der Rohrschaft bzw. der zugeordnete Druckausgleichkolben des unabhängig angetriebenen Schließgliedes aus dem Durchdringungsbereich in den Innenraum des zugeordneten Ventilgehäuseteils hinein verschoben wird. Mit Blick auf das abhängig angetriebene Schließglied ergeben sich umgekehrte Verhältnisse; Teile der Ventilstange oder des Rohrschaftes bzw. des zugeordneten Druckausgleichkolbens in diesem Bereich werden im Bewegungsumfang des Öffnungshubs aus dem Innenraum des zugeordneten Ventilgehäuseteils in den Durchdringungsbereich verschoben. Steht Produkt in beiden Ventilgehäuseteilen an, dann ergibt sich beim Öffnungs- und Schließhub ggf. in die zugeordneten Durchdringungsbereiche der Stangendurchführungen beider Schließglieder eine Produktverschleppung. Steht jedoch Reinigungsflüssigkeit im Zuge der Sitzreinigung an, dann sind die in das Ventilgehäuseteil hineinragenden Teile der Ventilstange oder des Rohrschaftes bzw. des zugeordneten Druckausgleichkolbens des abhängig angetriebenen Schließgliedes bereits gereinigt und werden demzufolge bei Öffnungshub bzw. beim Teilhub auch gereinigt in die Durchführung hineingefahren. Bei dem bekannten Doppelsitzventil nach der EP 0 587 690 B1 ist von Vorteil, wie bei allen anderen Doppelsitzventilen, die nach unten öffnen und einen nach unten aus dem Ventilgehäuse herausgeführten Leckageablauf aufweisen (beispielsweise Doppelsitzventil gemäß EP 0 646 741 A1), dass in der Offenstellung des Doppelsitzventils der Durchtrittsquerschnitt einer die beiden Ventilgehäuseteile miteinander verbindenden Verbindungsöffnung nicht durch den Querschnitt des Leckageablaufs, der als Rohrschaft ausgebildet und am unten liegenden Schließglied angeordnet ist, eingeengt wird. Dies reduziert insbesondere dann die vom Durchtrittsquerschnitt der Verbindungsöffnung determinierte Nennweite des Ventilgehäuses um ein bis zwei Nennweiten, wenn, wie beispielsweise in den USA gefordert, der Durchtrittsquerschnitt des Leckageablaufs zwischen Leckagehohlraum und Umgebung des Doppelsitzventils gleich dem größten Durchtrittsquerschnitt der an das Doppelsitzventil angeschlossenen Rohrleitung sein muss.

In der WO 2005/098287 wird ein Doppelsitzventil mit den Merkmalen des Oberbegriffs von Anspruch 1 beschrieben.

Es ist Aufgabe der vorliegenden Erfindung, bei einem sitzreinigungsfähigen Doppelsitzventil der einleitend beschriebenen Art eine hinreichende Reinigung der Durchführung der Ventilstange oder der zu einem Druckausgleichkolben erweiterten Ventilstange des unabhängig angetriebenen Schließgliedes sicherzustellen sowie ein Verfahren zur Reinigung dieses sitzreinigungsfähigen Doppelsitzventils anzugeben.

### ZUSAMMENFASSUNG DER ERFINDUNG

Diese Aufgabe wird durch ein sitzreinigungsfähiges Doppelsitzventil mit den Merkmalen des Anspruchs 1 erreicht. Vorteilhafte Ausgestaltungen des sitzreinigungsfähigen Doppelsitzventils gemäß der Erfindung sind in Unteransprüchen beschrieben.

Ein erster erfinderischer Grundgedanke besteht darin, bei einem Doppelsitzventil, das hinsichtlich seines grundsätzlichen Aufbaus, bezogen auf eine vertikale Anordnung, eine Öffnungsbewegung nach unten vollzieht, gleichzeitig mit der Sitzreinigung des unabhängig angetriebenen, ersten, als Schieberkolben ausgebildeten Schließgliedes einen zweiten Ringspalt zwischen der als Hohlstange ausgebildeten ersten Ventilstange für das erste Schließglied und der ersten Stangendichtung freizulegen. Zu diesem Zweck wird das erste Schließglied entgegen seiner Öffnungsrichtung um einen ersten Teilhub aus seiner Schließstellung so weit aus der Verbindungsöffnung in den Innenraum des ersten Ventilgehäuseteils hinein verschoben, bis der zugeordnete zylindrische Ventilsitz zum Zwecke seiner Sitzreinigung spaltweit geöffnet ist (Bildung eines ersten Ringspaltes). Dabei vollzieht die zugeordnete erste Ventilstange im Bereich der ersten Stangendichtung eine entsprechende synchrone Teilhubbewegung. Die erste Stangendichtung realisiert im Zusammenwirken mit der ersten Ventilstange bzw. dem ersten Druckausgleichkolben, zu dem die erste Ventilstange ggf. erweitert ist, eine Abdichtungsstelle an einer ersten Durchführung.

Ein zweiter erfinderischer Grundgedanke besteht darin, die quasi an der ersten Stangendichtung aus dem Innenraum des ersten Ventilgehäuseteils "geerntete" Reinigungsflüssigkeit einer Spülkammer einer ersten Spüleinrichtung zuzuführen, die die erste Ventilstange oder die zu einem ersten Druckausgleichkolben erweiterte erste Ventilstange im Anschluss an die erste Stangendichtung mit einer Spülkammer vollumfänglich umschließt. Zu diesem Zweck verbindet der zweite Ringspalt den Innenraum des ersten Ventilgehäuseteils mit der Spülkammer.

Eine vorteilhafte Ausgestaltung der vorgeschlagenen Erfindung sieht vor, dass die Spülkammer eine axiale Erstreckungslänge, beginnend an der Abdichtungsstelle, von mindestens dem vollen Öffnungshub des Doppelsitzventils aufweist. Diese Bemessungsbedingung stellt sicher, dass die Reinigungsflüssigkeit den gesamten axialen Erstreckungsbereich der ersten Ventilstange umspült, der bei der vollen Öffnungs- und Schließbewegung mit Produkt in Berührung gekommen ist und über die erste Stangendichtung aus dem Innenraum des ersten Ventilgehäuseteils heraus in Richtung Spülkammer verschobenen ist.

Die Bildung des zweiten Ringspaltes mit der notwendigen radialen Tiefe kann grundsätzlich auf zwei Arten erfolgen, wie dies weiter vorgeschlagen wird, nämlich zum einen entweder durch einen an der ersten Ventilstange bzw. dem ersten Druckausgleichkolben in diesem Bereich vorgesehenen, in den Innenraum des ersten Ventilgehäuseteils auslaufenden radialen zweiten Rücksprung oder durch eine an der ersten Ventilstange bzw. dem ersten Druckausgleichkolben in diesem Bereich vorgesehene, axial begrenzte radiale Ausnehmung. Der radiale zweite Rücksprung oder die radiale Ausnehmung sind dabei axial so zu bemessen, dass in der Sitzreinigungsstellung die gehäuseseitig angeordnete erste Stangendichtung vollständig freigelegt ist.

Die zweite Art der Bildung des zweiten Ringspaltes im in Rede stehenden Bereich gelingt zum anderen dadurch, wie dies ein weiterer Vorschlag vorsieht, dass die notwendige radiale Tiefe des zweiten Ringspalt durch eine im ersten Ventilgehäuseteil in diesem Bereich vorgesehene, axial begrenzte gehäuseseitige radiale Ausnehmung gebildet und die erste Stangendichtung auf der ersten Ventilstange bzw. dem ersten Druckausgleichkolben angeordnet ist. Die Freilegung der ersten Stangendichtung erfolgt in der zugeordneten Sitzreinigungsstellung dadurch, dass die erste Stangendichtung in der hinreichend axial bemessenen gehäuseseitigen Ausnehmung positioniert ist.

Wird die erste Ventilstange im bewegten Bereich der ersten Durchführung als erster Druckausgleichkolben ausgebildet, dessen den Innenraum des ersten Ventilgehäuseteils begrenzende Ringfläche gleich oder näherungsweise gleich der benachbarten Ringfläche des ersten Schließgliedes ausgeführt ist, dann sind die vorstehend beschriebenen Merkmale zur Spaltbildung im Bereich der ersten Stangendichtung sinngemäß auf diese Konfiguration zu übertragen.

Zur Minimierung der Schaltkräfte am zweiten Schließglied und zur Maximierung des im Rohrschaft angeordneten Leckageauslaufs ist weiterhin vorgesehen, dass der Rohrschaft im bewegten Durchdringungsbereich des zweiten Ventilgehäuseteils als zweiter Druckausgleichkolben ausgebildet ist, dessen Durchmesser bis geringfügig kleiner als der Durchmesser der Verbindungsöffnung ausgeführt ist.

Gemäß einer vorteilhaften ersten Ausführungsform wird die Reinigungsflüssigkeit aus der Spülkammer über einen in die Umgebung des Doppelsitzventils führenden Auslaufstutzen abgeführt. Zu diesem Zweck ist die Spülkammer einer ersten Spüleinrichtung über einen Auslaufstutzen mit der Umgebung des Doppelsitzventils verbunden.

Die Spülkammer ist dabei derart mit einem Überlauf versehen, dass die Reinigungsflüssigkeit nach ihrem Eintritt in die Spülkammer zunächst in dieser um den vorg. axialen Erstreckungsbereich aufsteigen muss, bevor sie von dort in den Auslaufstutzen gelangen kann. Die wird dadurch erreicht, dass die Spülkammer an ihrem oberen Ende in den Überlauf einmündet, der andererseits mit dem Auslaufstutzen in Verbindung steht.

Damit die bis zum Überlauf mit Reinigungsflüssigkeit zu flutende Spülkammer im Anschluss an die Sitzreinigung vollständig bis zur Oberkante der ersten Stangendichtung oder bis zu deren randständiger Begrenzung entleert werden kann, befindet sich in diesem Bereich mindestens eine am Umfang der Spülkammer angeordnete Entleerungsbohrung, die den Fußbereich der Spülkammer mit dem nach außen in die Umgebung führenden Auslaufstutzen verbindet.

Es ist weiterhin sichergestellt, dass bei geschlossener Abdichtungsstelle, d.h. außerhalb der Sitzreinigungsstellung, innerhalb der Spülkammer keine Sumpfbildung oberhalb der ersten Stangendichtung vorliegt. Zu diesem Zweck reicht die Unterkante der Bohrung des Auslaufstutzens bis zur Oberkante der ersten Stangendichtung oder bis zu deren randständiger Begrenzung herunter.

Es ist weiterhin vorgesehen, die Reinigungsflüssigkeit aus der Spülkammer nach innen und von hier in den Leckagehohlraum abzuleiten. Hierzu ist vorgesehen, dass der vorgesehene Verbindungsweg mit einer in der ersten Ventilstange ausgebildeten, in die Spülkammer einmündenden Querbohrung beginnt. Es sind im weiteren Verlauf des Verbindungsweges zwei alternative Lösungen vorgesehen. Die erste Lösung sieht vor, dass die Querbohrung andererseits in einen Ringspalt einmündet, der zwischen der als Hohlstange ausgebildeten ersten Ventilstange und der diese zentrisch durchdringenden zweiten Ventilstange gebildet ist. Bei der zweiten Lösung mündet die Querbohrung andererseits in eine dezentral in der ersten Ventilstange ausgebildete Bohrung ein.

Ein anderer Vorschlag sieht vor, die Reinigungsflüssigkeit aus der Spülkammer nach innen und von hier in den im Rohrschaft angeordneten Leckageauslauf abzuleiten. Hierzu ist vorgesehen, dass der vorgesehene Verbindungsweg mit einer in der ersten Ventilstange ausgebildeten, in die Spülkammer einmündenden Querbohrung beginnt. Eine vorteilhafte Ausgestaltung des weiteren Verbindungsweges sieht vor, dass die Querbohrung andererseits in eine zentral in der zweiten Ventilstange ausgebildete Bohrung einmündet.

Mit dem durch die Ansprüche definierten erfindungsgemäßen sitzreinigungsfähigen Doppelsitzventil lässt sich ein erfindungsgemäßes Verfahren zur Reinigung dieses sitzreinigungsfähigen Doppelsitzventils durchführen, bei dem im Zuge des spaltweiten Freilegens der Sitzfläche des Schließgliedes, das durch einen zum vollen Öffnungshub gegensinnigen ersten Teilhub in seine Sitzreinigungsstellung verschoben ist, gleichzeitig eine abgedichtete erste Durchführung einer mit dem Schließglied verbundenen Ventilstange durch das zugeordnete Ventilgehäuseteil spaltweit freigelegt wird, so dass Reinigungsflüssigkeit aus dem Innenraum des zugeordneten Ventilgehäuseteils über die freigelegte erste Durchführung an die beim vollen Öffnungs- und Schließhub mit Produkt kontaminierten Bereiche der Ventilstange herangeführt wird.

### KURZBESCHREIBUNG DER ZEICHNUNGEN

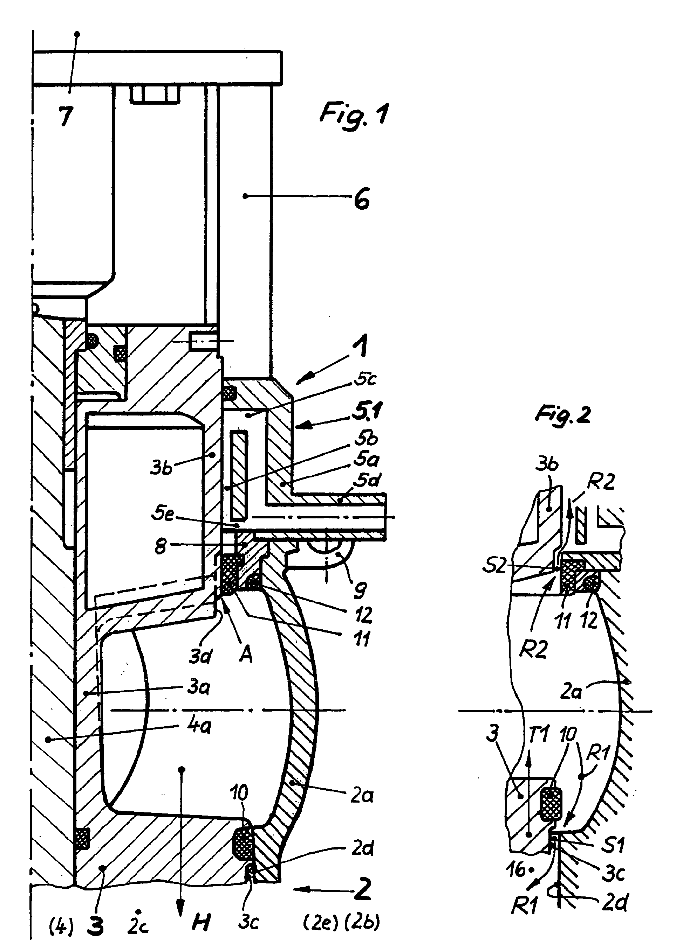

Ausführungsbeispiele der Erfindung sind in den Figuren der Zeichnung dargestellt und werden nachfolgend beschrieben. Es zeigen
- **Figur 1**: einen Meridianschnitt durch eine erste Ausführungsform des vorgeschlagenen sitzreinigungsfähigen Doppelsitzventils mit Reinigung der Stangendurchführung gemäß der Erfindung, wobei sich das Doppelsitzventil in seiner Schließstellung befindet und zum Einen ohne Antrieb und zum Anderen nur halbseitig und oberhalb des Dichtungsbereichs des oberen, ersten Schließgliedes dargestellt ist;
- **Figur 2**: gleichfalls einen Meridianschnitt durch eine gegenüber der ersten Ausführungsform gemäß **Figur 1** im Bereich oberhalb der ersten Stangendichtung geringfügig abgewandelte zweite Ausführungsform des vorgeschlagenen Doppelsitzventils, wobei sich dieses in seiner Sitzreinigungsstellung befindet und lediglich der spaltweit freigelegte Sitzbereich und die spaltweit geöffnete Durchführung der zu einem Druckausgleichkolben erweiterten ersten Ventilstange ausschnittsweise dargestellt sind;
- **Figur 3a**: einen Meridianschnitt durch eine zweite Ausführungsform des vorgeschlagenen sitzreinigungsfähigen Doppelsitzventils mit Reinigung der Stangendurchführung gemäß der Erfindung, wobei sich das Doppelsitzventil in seiner Schließstellung befindet und zum Einen ohne konkrete Ausführung eines Antrieb und zum Anderen, bezogen auf die Darstellungslage, nur linksseitig dargestellt ist;
- **Figur 3b**: einen Meridianschnitt durch eine dritte Ausführungsform des vorgeschlagenen sitzreinigungsfähigen Doppelsitzventils mit Reinigung der Stangendurchführung gemäß der Erfindung, wobei sich das Doppelsitzventil in seiner Schließstellung befindet und zum Einen ohne konkrete Ausführung eines Antrieb und zum Anderen, bezogen auf die Darstellungslage, nur rechtsseitig dargestellt ist;

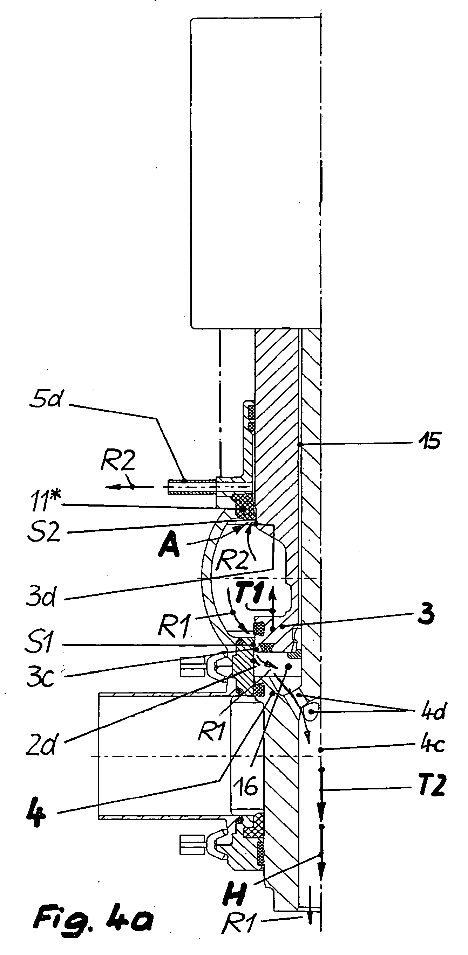

- **Figur 4a**: einen Meridianschnitt durch die zweite Ausführungsform des vorgeschlagenen sitzreinigungsfähigen Doppelsitzventils gemäß **Figur 3a****,** wobei sich das Doppelsitzventil in der Sitzreinigungsstellung des oberen, unabhängig angetriebenen ersten Schließgliedes befindet und, bezogen auf die Darstellungslage, nur linksseitig dargestellt ist und

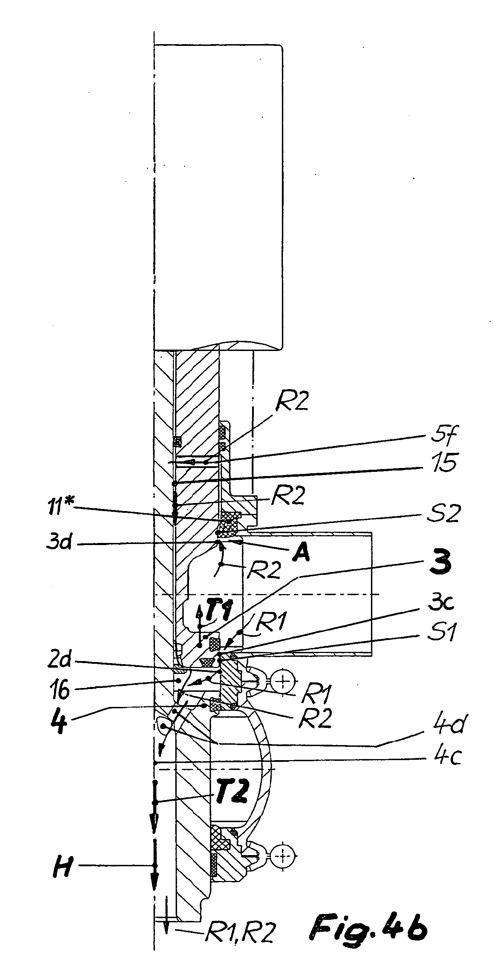

- **Figur 4b**: einen Meridianschnitt durch die dritte Ausführungsform des vorgeschlagenen sitzreinigungsfähigen Doppelsitzventils gemäß **Figur 3b****,** wobei sich das Doppelsitzventil in der Sitzreinigungsstellung des oberen, unabhängig angetriebenen ersten Schließgliedes befindet und, bezogen auf die Darstellungslage, nur rechtsseitig dargestellt ist.

Während die Erfindung in den verschiedensten Ausführungsformen realisierbar ist, werden in den Zeichnungen besonders bevorzugte Ausführungsformen gezeigt und nachfolgend beschrieben unter der Voraussetzung, dass diese nur Beispiele für die Erfindung darstellen, nicht aber die Erfindung auf die speziell dargestellten Beispiele beschränkt ist.

### DETAILLIERTE BESCHREIBUNG

Ein Doppelsitzventil 1 (**Figur 1** und ergänzend **Figuren 3a****,** **3b**) besteht gehäuseseitig im Wesentlichen aus einem Ventilgehäuse 2, das sich aus einem ersten Ventilgehäuseteil 2a und einem zweiten Ventilgehäuseteil 2b zusammensetzt, wobei die Ventilgehäuseteile 2a, 2b über eine Verbindungsöffnung 2c miteinander verbunden sind. In der Verbindungsöffnung 2c ist eine erste Sitzfläche 2d ausgebildet, die eine zylindrische Form besitzt. In der zylindrischen ersten Sitzfläche 2d gleitet dichtend ein als Schieberkolben ausgeführtes, unabhängig angetriebenes erstes Schließglied 3, das innerhalb einer in seiner Mantelfläche angeordneten Nut eine radial dichtende erste Sitzdichtung 10 aufnimmt. Bezogen auf eine vertikale Anordnungslage des Doppelsitzventils 1 ist unterhalb der ersten Sitzdichtung 10 am ersten Schließglied 3 ein radialer erster Rücksprung 3c vorgesehen, der nach einem ersten Teilhub T1 relativ kurzer axialer Erstreckung (s. **Figur 2**) ein spaltweites Öffnen des Ventilsitzes 10/2d zwischen erster Sitzdichtung 10 und zylindrischer erster Sitzfläche 2d in Form eines ersten Ringspaltes S1 generiert (s. hierzu auch **Figuren 4a****,** **4b**). Durch diesen ersten Ringspalt S1 gelangt dann, falls im ersten Ventilgehäuseteil 2a Reinigungsflüssigkeit ansteht, letztere in Gestalt einer ersten Sitzreinigungsströmung R1 aus dem ersten Ventilgehäuseteil 2a in einen Leckagehohlraum 16 zwischen dem ersten Schließglied 3 und einem zweiten Schließglied 4 und von dort über Verbindungsöffnungen 4d und eine sich anschließende Ablaufbohrung 4c, die von einem am zweiten Schließglied 4 angeordneten Rohrschaft 4b berandet wird, der das zweite Ventilgehäuseteil 2b nach unten durchdringt, in die Umgebung des Doppelsitzventils 1 (s. hierzu **Figuren 3a, 3b**).

Das zweite Schließglied 4 ist entweder als Schieberkolben oder als Sitzteller ausgebildet und wirkt mit einer zweiten Sitzfläche 2e zusammen, die in der Verbindungsöffnung 2c oder im Anschluss an letztere im zweiten Ventilgehäuseteil 2b angeordnet ist. Das dargestellte Doppelsitzventil 1 öffnet von oben nach unten, wobei das unabhängig angetriebene erste Schließglied 3, ausgehend von seiner dargestellten Schließstellung (**Figuren 1****,** **3a**), im Zuge seiner Öffnungsbewegung am abhängig angetriebenen zweiten Schließglied 4 zur Anlage kommt und beide Schließglieder 3, 4 nach einem vollen Öffnungshub H in die volle Offenstellung gelangen.

Das erste Schließglied 3 ist über eine als Hohlstange ausgebildete erste Ventilstange 3a mit einem Antrieb 7 verbunden (**Figuren 3a****,** **3b**), der in der Regel mit pneumatischem Druckmittel beaufschlagt wird und federschließend ausgestaltet ist. Hier werden in bestimmten Anwendungsfällen auch federöffnende oder doppeltwirkende pneumatische Antriebe 7 eingesetzt. Das erste Ventilgehäuseteil 2a und der Antrieb 7 sind über ein Latemengehäuse 6 miteinander verbunden. Das zweite Schließglied 4 ist über eine in der Hohlstange 3a geführte zweite Ventilstange 4a gleichfalls mit dem Antrieb 7 verbunden. Der Antrieb 7 besitzt die Fähigkeit, sowohl die Öffnungs- und Schließbewegung des Doppelsitzventils 1 mit dem Öffnungshub H als auch den ersten Teilhub T1 und einen zweiten Teilhub T2 des zweiten Schließgliedes 4 zu generieren (**Figuren 4a****,** **4b**). Der erste Teilhub T1 ist gegensinnig zum Öffnungshub H orientiert und überführt das erste Schließglied 3 in seine Sitzreinigungsstellung, wie in **Figur 2** dargestellt. Der zweite Teilhub T2 ist gleichsinnig zum Öffnungshub H orientiert und überführt das zweite Schließglied 4 in seine Sitzreinigungsstellung, in der der zugeordnete Ventilsitz 4/2e spaltweit geöffnet und ein zugeordneter Ringspalt gebildet ist, der eine zweite Sitzreinigungsströmung vom zweiten Ventilgehäuseteil 2b in den Leckagehohlraum 16 generiert (nicht dargestellt).

Die erste Ventilstange 3a ist im Bereich ihrer Durchführung durch das erste Ventilgehäuseteil 2a auf einen sog. ersten Druckausgleichkolben 3b erweitert (**Figuren 1, 3a, 3b**), der in seinem Durchmesser derart bemessen ist, dass die an seiner Unterseite gebildete Ringfläche gleich oder näherungsweise gleich ist der an der Oberseite des ersten Schließgliedes 3 gebildeten Ringfläche. Durch diese Ausgestaltung kompensieren sich die Kräfte auf die beiden Ringflächen aus dem Druck des im ersten Ventilgehäuseteil 2a anstehenden Fluids, so dass der Antrieb 7 weitestgehend von den Druckkräften aus diesem Fluid entlastet ist.

Der erste Druckausgleichkolben 3b wird außenseits über eine erste Stangendichtung 11, 11* verschieblich abgedichtet, wobei letztere (11) entweder in einem ringförmigen Gehäuseeinsatz 8 (**Figur 1**) oder als modifizierte erste Stangendichtung 11* im ersten Ventilgehäuseteil 2a (**Figuren 3a****,** **3b**) Aufnahme findet. Der erste Druckausgleichkolben 3b außenseits oder, falls keine Erweiterung auf diesen vorgesehen ist, die erste Ventilstange 3a außenseits und die erste Stangendichtung 11 oder 11* innenseits bilden diesbezüglich eine Abdichtungsstelle 3b, 11 oder 3b, 11* oder 3a, 11 oder 3a, 11* an einer erste Durchführung A. Der Gehäuseeinsatz 8 ist außenseits in einer Öffnung des ersten Ventilgehäuseteils 2a über eine Gehäusedichtung 12 statisch abgedichtet, während die modifizierte erste Stangendichtung 11* außenseits zusätzlich die ventilgehäuseseitige Abdichtung übernimmt.

An das erste Ventilgehäuseteil 2a schließt sich, vom ersten Druckausgleichkolben 3b vollständig durchdrungen, eine erste Spüleinrichtung 5.1 (**Figuren 1****,** **3a**) oder eine modifizierte erste Spüleinrichtung 5.1* (**Figur 3b**) an, wobei das erste Ventilgehäuse 2a und ein Spülkammergehäuse 5a der Spüleinrichtung 5.1, 5.1* an ihrer Verbindungsstelle vorzugsweise jeweils mit einem Klemmflansch versehen sind, die ein Spannring 9 form- und kraftschlüssig miteinander verbindet (**Figur 1**).

Das Spülkammergehäuse 5a bildet um den ersten Druckausgleichkolben 3b herum eine ringförmige Spülkammer 5b aus, die oberhalb in einem Überlauf 5c endet (**Figur 1**) und die axial so bemessen ist, dass in ihr der erste Druckausgleichkolben 3b mindestens im Umfang des vollen Öffnungshubes H verschoben werden kann. Unmittelbar oberhalb der ersten Stangendichtung 11 oder unmittelbar oberhalb einer randständigen Begrenzung letzterer (s. **Figuren 2** und **3a**) endet die Unterkante der Bohrung eines Auslaufstutzens 5d, der im ersten Falle (**Figur 1**) über den Überlauf 5c eine erste Verbindung zur Spülkammer 5b oder im zweiten Falle (Figuren 2, 3a) eine unmittelbare Verbindung zur Spülkammer 5b besitzt. Über eine Entleerungsbohrung 5e (**Figur 1**), die im Bereich der Unterkante der Bohrung des Auslaufstutzens 5d eine unmittelbare Verbindung zur Spülkammer 5b herstellt, kann letztere, wenn sich das Doppelsitzventil 1 nicht mehr in der Sitzreinigungsstellung des ersten Schließgliedes 3 befindet, vollständig entleert werden. Ein Verbleiben von Resten der Reinigungsflüssigkeit oberhalb der ersten Stangendichtung 11, eine sog. Sumpfbildung, wie sie in der eher schematischen Darstellung der **Figur 1** noch ersichtlich ist, ist in jedem Falle unerwünscht; sie ist in der realen konstruktiven Ausführung vollständig eliminiert (s. hierzu auch **Figur 3a**).

Am endseitigen Abschnitt des ersten Druckausgleichkolbens 3b, der in der Schließstellung des ersten Schließgliedes 3 über die erste Stangendichtung 11, 11* in den Innenraum des ersten Ventilgehäuseteils 2a hineinragt (**Figuren 1****,** **3a****,** **3b**), ist ein radialer zweiter Rücksprung 3d ausgebildet, der die notwendige radiale Tiefe eines zweiten Ringspalts S2 sicherstellt. Die Umfangsfläche dieses zweiten Rücksprungs 3d bildet nach Vollzug des ersten Teilhubs T1 (s. **Figuren 2****,** **4a****,** **4b**) mit der ersten Stangendichtung 11, 11* den zweiten Ringspalt S2, so dass in der Sitzreinigungsstellung des ersten Schließgliedes 3 die erste Durchführung A spaltweit freigelegt ist und eine Stangenreinigungsströmung R2 generiert wird, die aus dem Innenraum des ersten Ventilgehäuseteils 2a über die freigelegte erste Stangendichtung 11, 11* in die Spülkammer 5b gelangt. Falls letztere mit dem Überlauf 5c ausgestattet ist (**Figur 1**), dann steigt die Reinigungsflüssigkeit bis zu diesem hoch und gelangt über den Auslaufstutzen 5d in die Umgebung des Doppelsitzventils 1. Nach Beendigung der Sitzreinigung in Verbindung mit der Reinigung der ersten Durchführung A kann die Spülkammer 5b über die Entleerungsbohrung 5e restlos leerlaufen. Bei der Ausführungsform nach den **Figuren 3a****,** **4a** wird die Spülkammer 5b im Zuge der Stangenreinigung weitgehend bis an ihr oberes Ende mit Reinigungsflüssigkeit beaufschlagt, und die vollständige Entleerung der Spülkammer 5b im Anschluss an die Stangenreinigung ist dadurch sichergestellt, dass die Unterkante der Bohrung des Auslaufstutzens 5d bis zur Oberkante der modifizierten ersten Stangendichtung 11* oder bis zu deren randständiger Begrenzung herunter reicht.

Die notwendige radiale Tiefe des zweiten Ringspalts S2 wird alternativ durch eine an der ersten Ventilstange 3a, 3b in diesem Bereich vorgesehene, axial begrenzte radiale Ausnehmung 3d* gebildet. Ein weiterer Vorschlag sieht vor, die notwendige radiale Tiefe des zweiten Ringspalts S2 alternativ durch eine im ersten Ventilgehäuse 2a in diesem Bereich vorgesehene, axial begrenzte gehäuseseitige radiale Ausnehmung 2a* zu bilden. Diese beiden alternativen Lösungen sind nicht dargestellt.

In den **Figuren 3b** und **4b** (rechtsseitige Darstellung) ist, ebenso wie in den **Figuren 3a** und **4a** (linksseitigen Darstellungen), das sitzreinigungsfähige Doppelsitzventil 1 unterhalb des Antriebs 7 vollständig dargestellt. Diese Ausführungsform des Doppelsitzventils 1 weist das als Schieberkolben ausgebildetes zweite Schließglied 4 auf, das mit einer zweiten Sitzdichtung 13 in der in der Verbindungsöffnung 2c ausgebildeten zylindrischen zweiten Sitzfläche 2e radial dichtet. Die Verbindungsöffnung 2c mit den beiden Sitzflächen 2d, 2e ist in einem Sitzring 17 angeordnet, der über eine Gehäusedichtung 12 obenseits gegenüber dem ersten Ventilgehäuseteil 2a und über eine weitere Gehäusedichtung 12 untenseits gegenüber dem zweiten Ventilgehäuseteil 2b gedichtet ist. Eine Mitteldichtung 14 in der dem zweiten Schließglied 4 zugewandten Stirnfläche des ersten Schließgliedes 3 sorgt für einen dichtenden Kontakt der beiden Schließglieder 3, 4 miteinander, wenn diese sich in der Offenstellung oder in der Öffnungs- und Schließbewegung des Doppelsitzventils 1 befinden. Damit ist in diesen Stellungen auch eine Abdichtung des Leckagehohlraumes 16 gegenüber den Innenräumen der Ventilgehäuseteile 2a, 2b sichergestellt. Die Ventilgehäuseteile 2a, 2b sind mit Klemmflanschen ausgestattet, die über einen Spannring 9 miteinander verbunden sind. Eine entsprechende Verbindung liegt zwischen dem zweiten Ventilgehäuseteil 2b und einem nicht bezeichneten Gehäusedeckel vor, der von dem Rohrschaft 4b nach unten abgedichtet und geführt durchdrungen ist.

Der das zweite Ventilgehäuse 2b nach unten abgedichtet durchsetzende Rohrschaft 4b des zweiten Schließgliedes 4, der auch zu einem zweiten Druckausgleichkolben 4b in der vorstehend beschriebenen Weise erweitert sein kann, kann im Durchdringungsbereich mit dem zweiten Ventilgehäuse 2b und im Anschluss daran von einer zweiten Spüleinrichtung 5.2 berandet sein, so dass auch diese Bereiche gleichzeitig mit der Sitzreinigung des zweiten Schließgliedes 4, weitgehend vergleichbar mit der vorstehend beschriebenen Prozedur im Zusammenhang mit der Sitzreinigung des ersten Schließgliedes 3 und der Reinigung der ersten Durchführung A, zuverlässig gereinigt werden.

Bei der Ausführungsform des Doppelsitzventils nach den **Figuren 3b****,** **4b** erfolgt die Ableitung der Stangenreinigungsströmung R2 aus der Spülkammer 5b über das Innere des Doppelsitzventils 1. Zu diesem Zweck ist die Spülkammer 5b entweder mit dem Leckagehohlraum 16 (dargestellt) oder mit der Ablaufbohrung 4c im Rohrschaft 4b (nicht dargestellt) verbunden, und dieser Verbindungsweg beginnt mit einer in der ersten Ventilstange 3a, 3b ausgebildeten, in die Spülkammer 5b einmündenden Querbohrung 5f. Letztere mündet andererseits in einen Ringspalt 15 ein, der zwischen der als Hohlstange ausgebildeten ersten Ventilstange 3a, 3b und der diese zentrisch durchdringenden zweiten Ventilstange 4a gebildet ist. Alternativ zum Verbindungsweg über den Ringspalt 15. ist vorgesehen, dass die Querbohrung 5f andererseits in eine dezentral in der ersten Ventilstange 3a, 3b ausgebildete Bohrung einmündet (nicht dargestellt). Der Verbindungsweg zur Ablaufbohrung 4c kann auch dadurch realisiert werden, dass die Querbohrung 5f andererseits in eine zentral in der zweiten Ventilstange 4a ausgebildete Bohrung einmündet (nicht dargestellt).

Aus dem oben Genannten wird verständlich, dass verschiedene Modifikationen und Varianten des sitzreinigungsfähigen Doppelsitzventils 1 realisiert werden können, ohne von dem neuen Konzept der vorliegenden Erfindung abzuweichen. Dies ist so zu verstehen, dass keine Beschränkung auf die speziellen Ausführungsformen beabsichtigt ist, welche hier illustriert worden sind. Die Offenbarung soll alle solchen Abwandlungen umfassen, die sich innerhalb des von den Ansprüchen beanspruchten Schutzbereichs befinden.

### BEZUGSZEICHENLISTE DER VERWENDETEN ABKÜRZUNGEN

- 1: Doppelsitzventil
- 2: Ventilgehäuse
- 2a: erstes Ventilgehäuseteil
- 2a*: gehäuseseitige Ausnehmung
- 2b: zweites Ventilgehäuseteil
- 2c: Verbindungsöffnung
- 2d: (zylindrische) erste Sitzfläche
- 2e: zweite Sitzfläche (radial; konisch; eben und senkrecht zur Längsachse)
- 3: erstes Schließglied (Schieberkolben)
- 3a: erste Ventilstange (Hohlstange)
- 3a, 11: Abdichtungsstelle
- 3a, 11*: Abdichtungsstelle
- 3b: erster Druckausgleichkolben
- 3b, 11: Abdichtungsstelle
- 3b, 11*: Abdichtungsstelle
- 3c: (radialer) erster Rücksprung
- 3d: (radialer) zweiter Rücksprung
- 3d*: radiale Ausnehmung
- 4: zweites Schließglied (Sitzteller oder Schieberkolben)
- 4a: zweite Ventilstange
- 4b: Rohrschaft (zweiter Druckausgleichkolben)
- 4c: Ablaufbohrung
- 4d: Verbindungsöffnung
- 5.1: erste Spüleinrichtung
- 5.1*: modifizierte erste Spüleinrichtung
- 5a: Spülkammergehäuse
- 5b: Spülkammer
- 5c: Überlauf
- 5d: Auslaufstutzen
- 5e: Entleerungsbohrung
- 5f: Querbohrung
- 5.2: zweite Spüleinrichtung
- 6: Laternengehäuse
- 7: Antrieb
- 8: Gehäuseeinsatz
- 9: Spannring
- 10: erste Sitzdichtung (radial dichtend)
- 11: erste Stangendichtung
- 11*: modifizierte erste Stangendichtung
- 12: Gehäusedichtung
- 13: zweite Sitzdichtung (radial oder radial/axial oder axial dichtend)
- 14: Mitteldichtung
- 15: Ringspalt
- 16: Leckagehohlraum
- 17: Sitzring
- A: erste Durchführung
- H: Öffnungshub
- R1: erste Sitzreinigungsströmung
- R2: Stangenreinigungsströmung
- S1: erster Ringspalt
- S2: zweiter Ringspalt
- T1 erster: Teilhub
- T2: zweiter Teilhub

## Patentansprüche

1. Sitzreinigungsfähiges Doppelsitzventil (1) mit zwei seriell angeordneten, relativ zueinander bewegbaren Schließgliedern (3, 4), die in der Schließstellung des Doppelsitzventils (1) das Überströmen von Fluiden von einem Ventilgehäuseteil (2a; 2b) in ein anderes (2b; 2a) verhindern und die sowohl in der Schließ- als auch in der Offenstellung einen Leckagehohlraum (16) begrenzen, der, bezogen auf eine vertikale Anordnung des Doppelsitzventils (1), einen- nach unten aus dem zweiten Ventilgehäuseteil (2b) herausgeführten Leckageablauf aufweist, mit dem ersten Schließglied (3), das als Schieberkolben ausgebildet und unabhängig angetrieben ist und in seiner Schließstellung in einer die Ventilgehäuseteile (2a, 2b) miteinander verbindenden Verbindungsöffnung (2c) dichtend Aufnahme findet und bei seiner nach unten gerichteten Öffnungsbewegung in die volle Offenstellung (H) am einer zweiten Sitzfläche (2e) zugeordneten zweiten Schließglied (4) dichtend zur Anlage kommt und dieses gleichfalls in die Offenstellung (H) überführt, mit einer im ersten Schließglied (3) angeordneten ersten Sitzdichtung (10), die radial gegenüber einer in der Verbindungsöffnung (2c) ausgebildeten zylindrischen ersten Sitzfläche (2d) abdichtet, mit den Schließgliedern (3, 4), die unabhängig voneinander durch einen Teilhub (T1, T2) jeweils spaltweit in eine Sitzreinigungsstellung zwecks Spülung ihrer Sitzflächen (2d, 2e) überführbar sind, wobei das zweite Schließglied (4) durch einen mit der Öffnungsbewegung gleichsinnigen zweiten Teilhub (T2) und das erste Schließglied (3) durch einen mit der Öffnungsbewegung gegensinnigen ersten Teilhub (T1) in seine jeweilige Sitzreinigungsstellung überführbar sind, mit konzentrisch ineinander angeordneten Ventilstangen (3a, 4a) für die Schließglieder (3, 4), die nach oben in einen gemeinsamen Antrieb (7) hineingeführt sind, mit einem am zweiten Schließglied (4) angeordneten Rohrschaft (4b), der radial außenseits das zweite Ventilgehäuseteil (2b) nach unten abgedichtet durchdringt, radial innenseits über eine Ablaufbohrung (4c) den Leckagehohlraum (16) mit der Umgebung des Doppelsitzventils (1) verbindet und der nach oben in die zweite Ventilstange (4a) des zweiten Schließgliedes (4) übergeht, **dadurch gekennzeichnet, dass** bei nach oben mit dem ersten Teilhub (T1) in die zugeordnete Sitzreinigungsstellung unter Bildung eines ersten Ringspalts (S1) bewegtem ersten Schließglied (3) eine Abdichtungsstelle (3a, 11; 3a, 11*; 3b, 11; 3b, 11*) an einer ersten Durchführung (A) zwischen der das erste Schließglied (3) bewegenden ersten Ventilstange (3a; 3b) und dem zugeordneten ersten Ventilgehäuseteil (2a) in Form eines zweiten Ringspaltes (S2) geöffnet ist und dieser den Innenraum des ersten Ventilgehäuseteils (2a) mit einer Spülkammer (5b) einer ersten Spüleinrichtung (5.1; 5.1*) verbindet, die die erste Ventilstange (3a, 3b) umschließt.

2. Sitzreinigungsfähiges Doppelsitzventil nach Anspruch 1,
**dadurch gekennzeichnet,**
**dass** die Spülkammer (5b) eine axiale Erstreckungslänge, beginnend an der Abdichtungsstelle (3a, 11; 3a, 11*; 3b, 11; 3b, 11*), von mindestens dem vollen Öffnungshub (H) des Doppelsitzventils (1) aufweist.

3. Sitzreinigungsfähiges Doppelsitzventil nach Anspruch 1 oder 2,
**dadurch gekennzeichnet,**
**dass** die erste Ventilstange (3a) im bewegten Bereich der ersten Durchführung (A), als erster Druckausgleichkolben (3b) ausgebildet ist, dessen den Innenraum des ersten Ventilgehäuseteils (2a) begrenzende Ringfläche gleich oder näherungsweise gleich der benachbarten Ringfläche des ersten Schließgliedes (3) ausgeführt ist.

4. Sitzreinigungsfähiges Doppelsitzventil nach einem der Ansprüche 1 bis 3,
**dadurch gekennzeichnet,**
**dass** der Rohrschaft (4b) im bewegten Durchdringungsbereich des zweiten Ventilgehäuseteils (2b) als zweiter Druckausgleichkolben ausgebildet ist, dessen Durchmesser bis geringfügig kleiner als der Durchmesser der Verbindungsöffnung (2c) ausgeführt ist.

5. Sitzreinigungsfähiges Doppelsitzventil nach einem der Ansprüche 1 bis 4,
**dadurch gekennzeichnet,**
**dass** die notwendige radiale Tiefe des zweiten Ringspalt (S2) durch einen an der ersten Ventilstange (3a, 3b) in diesem Bereich vorgesehenen, in den Innenraum des ersten Ventilgehäuseteils (2a) auslaufenden radialen zweiten Rücksprung (3d) gebildet ist.

6. Sitzreinigungsfähiges Doppelsitzventil nach einem der Ansprüche 1 bis 4,
**dadurch gekennzeichnet,**
**dass** die notwendige radiale Tiefe des zweiten Ringspalt (S2) durch eine an der ersten Ventilstange (3a, 3b) in diesem Bereich vorgesehene, axial begrenzte radiale Ausnehmung (3d*) gebildet ist.

7. Sitzreinigungsfähiges Doppelsitzventil nach einem der Ansprüche 1 bis 4,
**dadurch gekennzeichnet,**
**dass** die notwendige radiale Tiefe des zweiten Ringspalt (S2) durch eine im ersten Ventilgehäuseteil (2a) in diesem Bereich vorgesehene, axial begrenzte gehäuseseitige radiale Ausnehmung (2a*) gebildet und die erste Stangendichtung (11) auf der ersten Ventilstange (3a, 3b) angeordnet ist.

8. Sitzreinigungsfähiges Doppelsitzventil nach einem der Ansprüche 1 bis 7,
**dadurch gekennzeichnet,**
**dass** die Spülkammer (5b) über einen Auslaufstutzen (5d) mit der Umgebung des Doppelsitzventils (1) verbunden ist.

9. Sitzreinigungsfähiges Doppelsitzventil nach Anspruch 8,
**dadurch gekennzeichnet,**
**dass** die Spülkammer (5b) an ihrem oberen Ende in einen Überlauf (5c) einmündet, der andererseits mit dem Auslaufstutzen (5d) in Verbindung steht.

10. Sitzreinigungsfähiges Doppelsitzventil nach Anspruch 9,
**dadurch gekennzeichnet,**
**dass** eine Entleerungsbohrung (5e) vorgesehen ist, die den Fußbereich der Spülkammer (5b) mit dem Auslaufstutzen (5d) verbindet.

11. Sitzreinigungsfähiges Doppelsitzventil nach einem der Ansprüche 8 bis 10,
**dadurch gekennzeichnet,**
**dass** die Unterkante der Bohrung des Auslaufstutzens (5d) bis zur Oberkante der ersten Stangendichtung (11, 11*) oder bis zu deren randständiger Begrenzung herunter reicht.

12. Sitzreinigungsfähiges Doppelsitzventil nach einem der Ansprüche 1 bis 7,
**dadurch gekennzeichnet,**
**dass** die Spülkammer (5b) mit dem Leckagehohlraum (16) verbunden ist und dieser Verbindungsweg mit einer in der ersten Ventilstange (3a, 3b) ausgebildeten, in die Spülkammer (5b) einmündenden Querbohrung (5f) beginnt.

13. Sitzreinigungsfähiges Doppelsitzventil nach Anspruch 12,
**dadurch gekennzeichnet,**
**dass** die Querbohrung (5f) andererseits in einen Ringspalt (15) einmündet, der zwischen der als Hohlstange ausgebildeten ersten Ventilstange (3a, 3b) und der diese zentrisch durchdringenden zweiten Ventilstange (4a) gebildet ist.

14. Sitzreinigungsfähiges Doppelsitzventil nach Anspruch 12,
**dadurch gekennzeichnet,**
**dass** die Querbohrung (5f) andererseits in eine dezentral in der ersten Ventilstange (3a, 3b) ausgebildete Bohrung einmündet.

15. Sitzreinigungsfähiges Doppelsitzventil nach einem der Ansprüche 1 bis 7,
**dadurch gekennzeichnet,**
**dass** die Spülkammer (5b) mit der Ablaufbohrung (4c) verbunden ist und dieser Verbindungsweg mit einer in der ersten Ventilstange (3a, 3b) ausgebildeten, in die Spülkammer (5b) einmündenden Querbohrung (5f) beginnt.

16. Sitzreinigungsfähiges Doppelsitzventil nach Anspruch 15,
**dadurch gekennzeichnet,**
**dass** die Querbohrung (5f) andererseits in eine zentral in der zweiten Ventilstange (4a) ausgebildete Bohrung einmündet.

17. Verfahren zur Reinigung des sitzreinigungsfähigen Doppelsitzventils nach einem der vorhergehenden Ansprüche,
**dadurch gekennzeichnet,**
**dass** im Zuge des spaltweiten Freilegens der Sitzfläche des Schließgliedes, das durch einen zum vollen Öffnungshub (H) gegensinnigen ersten Teilhub (T1) in seine Sitzreinigungsstellung verschoben ist, gleichzeitig eine abgedichtete erste Durchführung (A) einer mit dem Schließglied verbundenen Ventilstange durch das zugeordnete Ventilgehäuseteil spaltweit freigelegt wird, so dass Reinigungsflüssigkeit aus dem Innenraum des zugeordneten Ventilgehäuseteils über die freigelegte erste Durchführung in eine Spülkammer einer ersten Spüleinrichtung herangeführt wird, wobei die Spülkammer die beim vollen Öffnungs- und Schließhub mit Produkt kontaminierten Bereiche der Ventilstange umschließt.

## Claims

1. A double-seat valve (1) having a seat-cleaning function having two serially disposed closing elements (3, 4) that are movable relative to each other that in the closed position of the double-seat valve (1) prevent an overflow of fluid from one valve housing part (2a; 2b) into another (2b; 2a) and that in the closed as well as in the open position define a leakage cavity (16), which comprises a drain outlet leading downward, relative to a vertical arrangement of the double-seat valve (1), out of the second valve housing part (2b), having the first closing element (3) that is designed as a slide piston and is driven independently and in its closed position rests, forming a seal, in the connecting opening (2c) joining the valve housing parts (2a, 2b) together, and during its downward directed opening movement into the completely open position (H), comes into contact in a sealing manner with the second closing element (4) assigned to a second seat (2e), and carries this also into the open position (H), having a first seat seal (10) arranged in the first sealing element (3) that seals radially against a cylindrical first seat (2d) formed in the connecting opening (2c), having the closing elements (3, 4) that can be moved independently of each other gap-wide by a partial lift (T1, T2), in each case, into a seat cleaning position for the purpose of flushing their seats (2d, 2e), wherein the second closing element (4) can be moved by a second partial lift (T2) in the same direction as the opening movement, and the first closing element (3) can be moved by a first partial lift (T1) in the direction counter to the opening movement, into its respective seat cleaning position, having valve rods (3a, 4a), arranged concentrically inside each other, for the closing elements (3, 4) that are led upward into a common drive (7), having a tubular shaft (4b), arranged at the second closing element (4), that penetrates the second valve housing part (2b) radially outside downward in a sealing manner, and connects the leakage cavity (16) radially inside via a drain bore (4c) to the surroundings of the double-seat valve (1), and that merges upward into the valve rod (4a) of the second closing element (4), **characterized in that** with the moved first closing element (3) with the first partial lift (T1) into the associated seat cleaning position, forming a first annular gap (S1), a sealing location (3a, 11; 3a, 11*; 3b, 11; 3b, 11*) is opened upward at a first passage (A) between the first valve rod (3a; 3b) moving the first closing element (3) and the associated first valve housing part (2a) in the form of a second annular gap (S2), and said gap connects the interior of the first valve housing part (2a) to a flush chamber (5b) of a first flush device (5.1; 5.1*), which encloses the first valve rod (3a, 3b).

2. The double-seat valve having a seat-cleaning function according to claim 1,
**characterized in that**
the flush chamber (5b) has an axial extension length, beginning at the sealing location (3a, 11; 3a, 11*, 3b, 11; 3b, 11*), of at least the complete opening lift (H) of the double-seat valve (1).

3. The double-seat valve having a seat-cleaning function according to claim 1 or 2, **characterized in that**
the first valve rod (3a) is formed as a first pressure balancing piston (3b) in the movable area of the first passage (A) whose annular surface bounding the interior of the first valve housing part (2a) is formed equal to, or approximately equal to the adjacent annular surface of the first closing element (3).

4. The double-seat valve having a seat-cleaning function according to one of the claims 1 to 3, **characterized in that**
the tubular shaft (4b) is formed as a second pressure balancing piston in the movable passage area of the second valve housing part (2b) whose diameter is designed up to marginally smaller than the diameter of the connecting opening (2c).

5. The double-seat valve having a seat-cleaning function according to one of the claims 1 to 4, **characterized in that**
the necessary radial depth of the second annular gap (S2) is formed by a radial second setback (3d) provided in this area at the first valve rod (3a, 3b), extending into the interior of the first part (2a).

6. The double-seat valve having a seat-cleaning function according to one of the claims 1 to 4, **characterized in that**
the necessary radial depth of the second annular gap (S2) is formed by an axially bounded radial recess (3d*), provided in this area at the first valve rod (3a, 3b).

7. The double-seat valve having a seat-cleaning function according to one of the claims 1 to 4, **characterized in that**
the necessary radial depth of the second annular gap (S2) is formed by an axially bounded housing-side radial recess (2a*), provided in this area in the first valve housing part (2a), and the first rod seal (11) is disposed on the first valve rod (3a, 3b).

8. The double-seat valve having a seat-cleaning function according to one of the claims 1 to 7, **characterized in that**
the flush chamber (5b) is connected to the surroundings of the double-seat valve (1) via an outlet connection (5d).

9. The double-seat valve having a seat-cleaning function according to claim 8,
**characterized in that**
the flush chamber (5b) discharges at its upper end into an overflow (5c), whose other side is connected to the outlet connection (5d).

10. The double-seat valve having a seat-cleaning function according to claim 9,
**characterized in that**
an emptying bore (5e) is provided which connects the base area of the flush chamber (5b) to the outlet connection (5d).

11. The double-seat valve having a seat-cleaning function according to one of the claims 8 to 10, **characterized in that**
the lower edge of the bore of the outlet connection (5d) extends down to the upper edge of the first rod seal (11, 11*) or to its marginal boundary.

12. The double-seat valve having a seat-cleaning function according to one of the claims 1 to 7, **characterized in that**
the flush chamber (5b) is connected to the leakage cavity (16), and this connection path begins at a transverse bore (5f), formed in the first valve rod (3a, 3b), and discharging into the flush chamber (5b).

13. The double-seat valve having a seat-cleaning function according to claim 12,
**characterized in that**
the transverse bore (5f) discharges on the other side into an annular gap (15), which is formed between the first valve rod (3a, 3b), formed as a hollow rod, and the second valve rod (4a) penetrating said first valve rod centrally.

14. The double-seat valve having a seat-cleaning function according to claim 12,
**characterized in that**
the transverse bore (5f) discharges on the other side into a bore formed decentrally in the first valve rod (3a, 3b).

15. The double-seat valve having a seat-cleaning function according to one of the claims 1 to 7, **characterized in that**
the flush chamber (5b) is connected to the drain bore (4c), and this connection path begins at a transverse bore (5f), formed in the first valve rod (3a, 3b), and discharging into the flush chamber (5b).

16. The double-seat valve having a seat-cleaning function according to claim 15,
**characterized in that**
he transverse bore (5f) discharges on the other side into a bore formed centrally in the second valve rod (4a).

17. A method for cleaning the double-seat valve having a seat-cleaning function according to one of the preceding claims, **characterized in that**
in the course of the gap-wide exposure of the seat of the closing element that is pushed into its seat cleaning position by a first partial lift (T1), in the direction counter to the complete opening lift (H), simultaneously a sealed first passage (A) of a valve rod connected to the closing element by the associated valve housing part is exposed gap-wide, such that cleaning fluid is fed from the interior of the associated valve housing part via the exposed first passage to the areas of the valve rod contaminated with product during complete opening and closing lift.

## Revendications

1. Soupape à double siège avec possibilité de nettoyage de siège (1) avec deux éléments de fermeture (3, 4) disposés en série et mobiles par rapport de l'un à l'autre, qui empêchent le courant de fluides d'une partie de la cage de soupape (2a; 2b) vers une autre partie (2b; 2a) dans la position fermée de la soupape à double siège (1) et qui limitent une cavité de fuite (16) dans la position fermée aussi bien que dans la position ouverte, qui a un déversoir de fuite faisant sortie de la deuxième partie de la cage de soupape (2b) vers le bas par rapport à une disposition verticale de la soupape à double siège (1), avec le premier élément de fermeture (3) qui est formé comme un piston glissant et entraîné de façon indépendante et qui est reçu de façon étanche dans une ouverture de liaison (2c) reliant les deux parties de la cage de soupape (2a; 2b) l'une à l'autre dans sa position fermée, et qui fait appui de façon étanche dans le deuxième élément de fermeture (4) associé à une deuxième surface de siège (2e) dans son mouvement d'ouverture dirigé vers le bas à la position complètement ouverte (H), menant aussi ledit deuxième élément de fermeture (4) dans la position ouverte (H), avec un première bourrage de siège (10) disposé dans le premier élément de fermeture (3) qui rend radialement étanche par rapport à une première surface de siège cylindrique (2d) formée dans l'ouverture de liaison (2c), avec les éléments de fermeture (3, 4) qui sont aptes à être mis dans une position de nettoyage de siège par une course partielle (T1, T2), chacune à largeur d'interstice, afin de rincer leurs surfaces de siège (2d, 2e), le deuxième élément de fermeture (4) étant apte à être mis dans sa position de nettoyage de siège respective par une course partielle (T2) au sens du mouvement d'ouverture, et le premier élément de fermeture (3) par une course partielle (T1) opposée au sens du mouvement d'ouverture, avec des barres de soupape (3a, 4a) pour les éléments de fermeture (3, 4) disposées l'une dans l'autre de façon concentrique qui sont introduits vers le haut dans un entraînement commun (7), avec une tige en tube (4b) disposée sur le deuxième élément de fermeture (4b) qui pénètre de façon étanche la deuxième partie de la cage de soupape (2b) vers le bas sur le côté radialement extérieur, relie la cavité de fuite (16) avec les environs de la soupape à double siège (1) via un trou d'écoulement (4c) sur le côté radialement intérieur et qui se change vers le haut en la deuxième barre de soupape (4a) du deuxième élément de fermeture, **caractérisée en ce que** quand le premier élément de fermeture (3) est transporté dans la position de nettoyage de siège associée par la première course partielle (T1), formant ainsi un premier interstice annulaire (S1), une position d'étanchéité (3a, 11; 3a, 11*; 3b, 11; 3b, 11*) sur une première traversée (A) entre la première barre de soupape (3a; 3b), mouvant le premier élément de fermeture (3) et la première partie de la cage de soupape (2a) associée est ouverte en forme d'un deuxième interstice annulaire (S2) et que celui-ci relie l'espace intérieur de la première partie de la cage de soupape (2a) avec une chambre de rinçage (5b) d'un premier dispositif de rinçage (5.1; 5.1*) qui enferme la première barre de soupape (3a, 3b).

2. Soupape à double siège avec possibilité de nettoyage de siège selon la revendication 1,
**caractérisée en ce que**
la chambre de rinçage (5b) a une longueur d'extension axiale, commençante dans la position d'étanchéité (3a, 11; 3a, 11*; 3b, 11; 3b, 11*), d'au moins la course d'ouverture (H) complète de la soupape à double siège (1).

3. Soupape à double siège avec possibilité de nettoyage de siège selon la revendication 1 ou 2,
**caractérisée en ce que**
dans la région mouvementée de la première traversée (A), la première barre de soupape (3a) est formée comme premier piston d'équilibrage (3b), dont la surface annulaire limitant l'espace intérieur de la première partie de la cage de soupape (2a) est formée égale ou approximativement égale à la surface annulaire adjacente du premier élément de fermeture (3).

4. Soupape à double siège avec possibilité de nettoyage de siège selon l'une quelconque des revendications 1 à 3,
**caractérisée en ce que**
dans la région de pénétration mouvementée de la deuxième partie de la cage de soupape (2b), la tige en tube (4b) est formée comme deuxième piston d'équilibrage (3b), dont le diamètre est formé jusqu'à minimalement plus petit que le diamètre de l'ouverture de liaison (2c).

5. Soupape à double siège avec possibilité de nettoyage de siège selon l'une quelconque des revendications 1 à 4,
**caractérisée en ce que**
la profondeur radiale nécessaire du deuxième interstice annulaire (S2) est formée par un deuxième retrait radial (3d) prévu sur la première barre de soupape (3a, 3b) dans cette région et finissant dans l'espace intérieur de la première partie de la cage de soupape (2a).

6. Soupape à double siège avec possibilité de nettoyage de siège selon l'une quelconque des revendications 1 à 4,
**caractérisée en ce que**
la profondeur radiale nécessaire du deuxième interstice annulaire (S2) est formée par un creux radial (3d*) axialement limité, prévu sur la première barre de soupape (3a, 3b) dans cette région.

7. Soupape à double siège avec possibilité de nettoyage de siège selon l'une quelconque des revendications 1 à 4,
**caractérisée en ce que**
la profondeur radiale nécessaire du deuxième interstice annulaire (S2) est formée par un creux radial (2a*) axialement limité au côté cage et prévu dans la première partie de la cage de soupape (2a) dans cette région, et que le premier bourrage de barre (11) est disposé sur la première barre de soupape (3a, 3b).

8. Soupape à double siège avec possibilité de nettoyage de siège selon l'une quelconque des revendications 1 à 7,
**caractérisée en ce que**
la chambre de rinçage (5b) est connectée aux environs de la soupape à double siège (1) via une tubulure d'écoulement (5d).

9. Soupape à double siège avec possibilité de nettoyage de siège selon la revendication 8,
**caractérisée en ce que**
dans son extrémité supérieure, la chambre de rinçage débouche dans un déversoir (5c) qui est en communication avec la tubulure d'écoulement (5d) dans l'autre côté.

10. Soupape à double siège avec possibilité de nettoyage de siège selon la revendication 9,
**caractérisée en ce que**
un trou de vidage (5e) est prévu qui relie la région de pied de la chambre de rinçage (5b) avec la tubulure d'écoulement (5d).

11. Soupape à double siège avec possibilité de nettoyage de siège selon l'une quelconque des revendications 8 à 10,
**caractérisée en ce que**
le bord inférieur du trou de la tubulure d'écoulement (5d) s'étend vers le bas jusqu'au bord supérieur du premier bourrage de barre (11, 11*) ou jusqu'à la limite de bord de celui-ci.

12. Soupape à double siège avec possibilité de nettoyage de siège selon l'une quelconque des revendications 1 à 7,
**caractérisée en ce que**
la chambre de rinçage (5b) est reliée à la cavité de fuite (16) et que ce chemin de liaison commence avec un trou transversal (5f) formé dans la première barre de soupape (3a, 3b) et s'écoulant dans la chambre de rinçage (5b).

13. Soupape à double siège avec possibilité de nettoyage de siège selon la revendication 12,
**caractérisée en ce que**
dans l'autre côté, le trou transversal (5f) s'écoule dans un interstice annulaire (15) qui est formé entre la première barre de soupape (3a, 3b) formée comme barre creuse, et la deuxième barre de soupape (4a) qui la pénètre de façon centrée.

14. Soupape à double siège avec possibilité de nettoyage de siège selon la revendication 12,
**caractérisée en ce que**
dans l'autre côté, le trou transversal (5f) s'écoule dans un trou qui est formé de façon décentrée dans la première barre de soupape (3a, 3b).

15. Soupape à double siège avec possibilité de nettoyage de siège selon l'une quelconque des revendications 1 à 7,
**caractérisée en ce que**
la chambre de rinçage (5b) est reliée au trou d'écoulement (4c) et ce chemin de liaison commence avec un trou transversal (5f) formé dans la première barre de soupape (3a, 3b) et s'écoulant dans la chambre de rinçage (5b).

16. Soupape à double siège avec possibilité de nettoyage de siège selon la revendication 15,
**caractérisée en ce que**
dans l'autre côté, le trou transversal (5f) s'écoule dans un trou qui est formé de façon centrée dans la deuxième barre de soupape (4a).

17. Procédé de nettoyage de la soupape à double siège avec possibilité de nettoyage de siège selon l'une quelconque des revendications précédentes,
**caractérisé en ce que**
au cours de l'exposition à largeur d'interstice de la surface de siège de l'élément de fermeture qui est déplacé dans sa position de nettoyage de siège par une première course partielle (T1) opposée au sens de la course d'ouverture complète (H), une première traversée rendue étanche (A) d'une barre de soupape reliée à l'élément de fermeture est exposée à largeur d'interstice au même temps, de sorte que du liquide de nettoyage est permis de s'approcher de l'espace intérieur de la partie de la cage de soupape associée vers une chambre de rinçage d'un premier dispositif de rinçage via la première traversée exposée, la chambre de rinçage enfermant les régions de la barre de soupape contaminées avec du produit dans les courses d'ouverture et fermeture complètes.
